# EUROPÄISCHE PATENTANMELDUNG

(11) **EP 3 770 017 A1**
(43) Veröffentlichungstag der Anmeldung: **27.01.2021**
(21) Anmeldenummer: 20180124.8
(22) Anmeldetag: 16.06.2020
(51) Int. Cl.: B60Q 1/46, B60Q 5/00, B60W 40/08

(54) **NOTFALLASSISTENZSYSTEM MIT AKUSTISCHER AUSSENWARNUNG**

(30) Priorität: 24.07.2019 DE 102019210979
(71) Anmelder: VOLKSWAGEN AG, 38440 Wolfsburg (DE)
(72) Erfinder: Eigel, Thomas, 13585 Berlin (DE)

(57) **Zusammenfassung**

Die Erfindung betrifft ein Verfahren zum Betrieb eines Fahrzeugs (10).

Es ist vorgesehen, dass ein Notfallassistenzsystem (12) bereits bei Vorliegen erster Indizien für eine nicht mehr hinreichend gewährleistete menschliche oder auch technische Kontrolle über das Fahrzeug (10) ausgebildet ist, auf Basis einer Risikogröße ein Warnsignal an eine Umgebung des Fahrzeugs (10) auszugeben.

## Beschreibung

Die Erfindung betrifft ein Verfahren zum Betrieb eines Fahrzeugs gemäß dem Oberbegriff des Patentanspruchs 1, ein Notfallassistenzsystem gemäß dem Oberbegriff des Patentanspruchs 9 und ein Fahrzeug gemäß dem Oberbegriff des Patentanspruchs 10.

Auf dem technischen Gebiet der Fahrzeuge sind unterschiedliche Notfallassistenzsysteme bekannt.

Aus der DE 10 2015 226 217 A1 ist beispielsweise ein Verfahren bekannt, in dem eine situative Auslösung einer Notbremsung und eine seitliche Ausschleusung aus dem Verkehr erfolgen. Zeitgleich werden Warnsignale, wie Blinken oder Hupen eingesetzt.

Die DE 102 40 018 B4 beschreibt ein Verfahren, in dem ein Fahrzeug seine Fahr- und Umgebungssituation auswertet und eine Kollisionswahrscheinlichkeit mit einem erkannten Hindernis bestimmt. Liegt die Wahrscheinlichkeit oberhalb eines bestimmten Wertes, wird ein Warnsignal an die Umgebung abgegeben.

Die DE 10 2010 056 187 A1 offenbart schließlich ein Verfahren, in dem durch ein Fahrzeug eine drohende Gefahr identifiziert wird und das Fahrzeug ein Warnsignal ausgibt, um eine Gefahrenbremsung zu signalisieren.

Die bekannten Systeme reagieren allerdings immer erst dann, wenn bereits eine Gefahrenbremsung erforderlich geworden ist oder zumindest eine Kollision droht.

Der Erfindung liegt nun die Aufgabe zugrunde, ein Notfallassistenzsystem zu schaffen, das die Vorwarnzeit mit der ein Warnsignal an die Umgebung abgegeben werden kann deutlich erhöht wird und insbesondere nicht gewartet wird, bis eine der oben genannten kritischen Situationen eintritt.

Die Aufgabe wird durch die Gegenstände der unabhängigen Patentansprüche 1, 9 und 10 gelöst. Weitere bevorzugte Ausgestaltungen der Erfindung ergeben sich aus den übrigen, in den Unteransprüchen und der Beschreibung genannten Merkmalen.

Ein erster Aspekt der Erfindung betrifft ein Verfahren zum Betrieb eines Fahrzeugs, umfassend die Schritte:
- Untersuchung eines Betriebszustands des Fahrzeugs durch ein Notfallassistenzsystem auf Merkmale, die mit einem zumindest drohenden Kontrollverlust über das Fahrzeug korrespondieren;
- Ermittlung einer Risikogröße, zumindest aus erkannten Merkmalen; und
- Ausgabe eines Warnsignals an eine Umgebung des Fahrzeugs, wenn die Risikogröße einen vorausgesetzten Mindestwert hat.

Von dem Begriff des drohenden Kontrollverlusts ist bereits ein Vorliegen erster Indizien für eine möglicherweise nicht mehr hinreichend gewährleistete menschliche oder auch technische Kontrolle über das Fahrverhalten des Fahrzeugs umfasst.

Somit kann in dem erfindungsgemäßen Verfahren bereits bei ersten Anzeichen für eine Fahrunfähigkeit reagiert werden. Es ist insbesondere nicht zwingend erforderlich, dass es bereits faktisch zu unkontrollierten Auswirkungen auf das Fahrverhalten in verkehrssicherheitsrelevantem Ausmaß gekommen sein muss. Das erfindungsgemäße Verfahren setzt insbesondere auch nicht zwingend voraus, dass für die Warnsignalgabe beispielsweise bereits ein Hindernis erkannt worden sein muss, mit dem eine Kollision droht oder dass bereits eine Notbremsung vorbereitet oder eingeleitet wird.

Gegenüber konventionellen Verfahren ist die Vorwarnzeit anderer Verkehrsteilnehmer mit dem Warnsignal daher signifikant reduziert.

Dem Fachmann sind technische Diagnoselösungen bekannt, mit denen unter Auswahl einschlägiger Bewertungskriterien die Indizien in die Risikogröße überführt werden können. Die Risikogröße umfasst dann eine Aussage, inwieweit ein Kontrollverlust möglich, wahrscheinlich oder sicher ist.

Ein Beispiel für Indizien mit möglicherweise langer Vorlaufzeit vor einem faktischen Eintritt unkontrollierter Auswirkungen auf das Fahrverhalten kann darin bestehen, dass ein Fahrer verzögert auf Reize aus der Umgebung reagiert, beispielsweise im Vergleich zu seinem bisherigen Verhaltensprofil. Die Reize können beispielsweise von anderen Fahrzeugen, Objekten, sonstigen Verkehrsteilnehmern, Spurlinien, Lichtsignalen oder Schildern herrühren. Dem kann beispielsweise eine akute gesundheitliche Störung oder auch Erschöpfung zugrunde liegen. Ein faktischer Eintritt unkontrollierter Auswirkungen auf das Fahrverhalten in verkehrssicherheitsrelevantem Ausmaß kann hier auftreten, muss es aber nicht.

Ein Beispiel mit wahrscheinlich kürzerer Vorlaufzeit der Indizien vor einem faktischen Eintritt unkontrollierter Auswirkungen auf das Fahrverhalten kann darin bestehen, dass ein technisches Überwachungssystem des Fahrzeugs eine Störung beispielsweise eines Lenkunterstützungssystems detektiert. Die detektierte Störung kann beispielsweise Spannungs-oder Hydraulikdruckverlust sein. Ein faktischer Eintritt unkontrollierter Auswirkungen auf das Fahrverhalten in verkehrssicherheitsrelevantem Ausmaß kann hier mit erhöhter Wahrscheinlichkeit auftreten, je nach Grad der Störung.

Ein Beispiel mit einer wahrscheinlich sehr kurzen Vorlaufzeit der Indizien vor einem tatsächlichen Kontrollverlust kann darin bestehen, dass ein Fahrer fahrunfähig geworden ist und nicht mehr in der Lage ist, aktiv in das Verkehrsgeschehen einzugreifen. Hier kann beispielsweise auf bekannten Wegen eine akute Bewusstlosigkeit eines Fahrers registriert werden, die mit an Sicherheit grenzender Wahrscheinlichkeit zu einem faktischen Eintritt unkontrollierter Auswirkungen auf das Fahrverhalten in verkehrssicherheitsrelevantem Ausmaß führen wird.

In bevorzugter Ausgestaltung des Verfahrens der Erfindung ist vorgesehen, dass zur Ermittlung der Risikogröße zusätzliche Faktoren einbezogen werden, deren Vorliegen im Falle eines Kontrollverlusts über das Fahrzeug das Risiko erhöht.

Dies begünstigt die Möglichkeit, gefährliche Situationen vorbeugend erkennen und vermeiden zu können. Die Sensibilität in der Erkennung gefährlicher Situationen ist auf Basis der Merkmale in Verbindung mit den zusätzlichen Faktoren deutlich gesteigert.

In weiterhin bevorzugter Ausgestaltung des Verfahrens der Erfindung ist vorgesehen, dass der vorausgesetzte Mindestwert höher eingestellt ist, als ohne Einbezug der zusätzlichen Risikofaktoren.

Zwar ist die zuvor beschriebene höhere Sensibilität grundsätzlich positiv zu sehen, jedoch steigt damit auch die Gefahr von Fehlalarmen. Insoweit ist es vorteilhaft, die Bewertung der Relevanz einer Situation selektiver durchzuführen. Durch Erhöhung des Mindestwertes bedarf es in diesem Sinne eines stärkeren Beitrags der Merkmale und zusätzlichen Faktoren zur Ausprägung der Risikogröße.

In weiterhin bevorzugter Ausgestaltung des Verfahrens der Erfindung ist vorgesehen, dass die zusätzlichen Faktoren ausgewählt werden aus der Gruppe: Zustand oder Verhalten von Objekten im Nahfeld des Fahrzeugs; Position des Fahrzeugs mit Hinblick auf risikobehaftete Streckenpunkte; Zustand oder Verhalten von Objekten auf einer geplanten Strecke des Fahrzeugs.

Somit können Fehlalarme beispielsweise dadurch vermieden werden und zugleich die Sicherheit in der Erkennung erhöht werden, dass nur tatsächlich relevante Situationen als Faktoren in die Risikogröße eingehen.

Risikobehaftete Streckenpunkte können beispielsweise von einer Straßenkreuzung gebildet werden, der sich das Fahrzeug annähert.

Der Zustand oder das Verhalten von Objekten im Nahfeld des Fahrzeugs kann beispielsweise erkannte Objekte auf der Fahrbahn betreffen oder auch ein anderes Fahrzeug und dessen Manöver. In das Nahfeld des Fahrzeugs fällt im Sinne der Erfindung alles, was mit fahrzeugeigener Sensorik direkt erfassbar ist.

Der Zustand oder das Verhalten von Objekten auf einer geplanten Strecke des Fahrzeugs kann beispielsweise Stauinformationen betreffen.

In weiterhin bevorzugter Ausgestaltung des Verfahrens der Erfindung ist vorgesehen, dass ein Zustand oder Verhalten von Objekten im Nahfeld des Fahrzeugs mit Umfeldsensorik des Fahrzeugs erfasst wird. Die Umfeldsensorik kann beispielsweise Abstandssensoren oder Kameras umfassen.

In weiterhin bevorzugter Ausgestaltung des Verfahrens der Erfindung ist vorgesehen, dass eine Position des Fahrzeugs mit Hinblick auf risikobehaftete Streckenpunkte und/oder ein Zustand oder Verhalten von Objekten auf einer geplanten Strecke des Fahrzeugs aus Kartenmaterial und/oder Schwarmdaten ermittelt wird.

Dabei kann beispielsweise auf Daten eines Navigationssystems zurückgegriffen werden oder auch auf Informationen zur Verkehrslage, die von anderen Fahrzeugen übermittelt werden.

In weiterhin bevorzugter Ausgestaltung des Verfahrens der Erfindung ist vorgesehen, dass das Warnsignal ein akustisches Warnsignal oder auch ein visuelles Warnsignal umfasst.

Eine Kombination akustischer und visueller Warnsignale kann zur Erhöhung der Sicherheit ebenfalls gewählt werden.

In weiterhin bevorzugter Ausgestaltung des Verfahrens der Erfindung ist vorgesehen, dass das Warnsignal aktiviert wird, bevor ein automatischer Sicherheitseingriff in einen dynamischen Betriebszustand des Fahrzeugs erfolgt.

Zweckmäßigerweise erfolgt der automatische Sicherheitseingriff spätestens dann, wenn das Fahrverhalten in verkehrssicherheitsrelevantem Ausmaß beeinträchtigt ist oder vorzugsweise bereits dann, wenn ein Kontrollverlust festgestellt ist.

Ein weiterer Aspekt der Erfindung betrifft ein Notfallassistenzsystem für ein Fahrzeug, ausgebildet zur Durchführung eines erfindungsgemäßen Verfahrens gemäß der vorhergehenden Beschreibung.

Ein weiterer Aspekt der Erfindung betrifft ein Fahrzeug, umfassend ein erfindungsgemäßes Notfallassistenzsystem gemäß der vorhergehenden Beschreibung.

Das Fahrzeug kann ein Land- oder Wasserfahrzeug sein. Vorzugsweise kann es ein Kraftfahrzeug sein, beispielsweise ein Automobil.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: einen schematischen Ablauf eines erfindungsgemäßen Verfahrens; und
- Figur 2: ein erfindungsgemäßes Fahrzeug mit einem erfindungsgemäßen Notfallassistenzsystem.

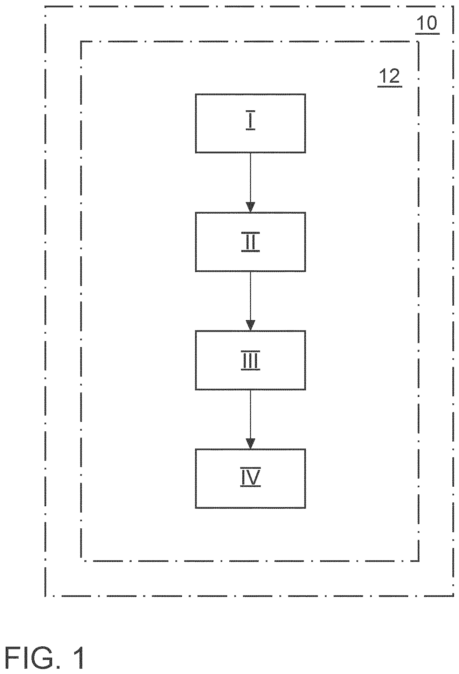

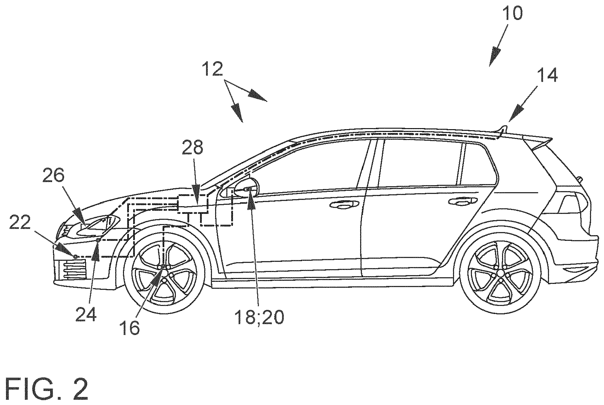

Figur 1 zeigt einen schematischen Ablauf eines erfindungsgemäßen Verfahrens, in dem ein erfindungsgemäßes Fahrzeug 10 betrieben wird, in den nachstehend näher beschriebenen Schritten. Das Fahrzeug 10, umfasst zu diesem Zeck ein erfindungsgemäßes Notfallassistenzsystem 12. Das Fahrzeug 10 und das Notfallassistenzsystem 12 sind in Figur 2 näher beschrieben.

In Figur 1 werden zunächst die durchgeführten Verfahrensschritte, symbolisiert durch ein Ablaufschema erläutert.

In einem ersten Schritt I, wird mit dem Notfallassistenzsystem 12 ein Betriebszustand des Fahrzeugs 10 untersucht. Der Betriebszustand umfasst insbesondere fahrdynamische Größen, wie Position, Geschwindigkeit und Beschleunigung des Fahrzeugs und kann auch Bedienungsgrößen in Bezug auf eine Betätigung von Stellgliedern des Fahrzeugs 10 durch einen Fahrer umfassen. Beispiele für solche Bedienungsgrößen wären Lenkbewegungen oder auch die Betätigung von Pedalen.

Während das Notfallassistenzsystem 12 den Betriebszustand erfasst, sucht es in einem zweiten Schritt II nach Merkmalen, die mit einem zumindest drohenden Kontrollverlust über das Fahrzeug 12 korrespondieren. Rein exemplarisch erfasst das Notfallassistenzsystem 12 in Schritt I Fahrbahnmarkierungen und eine Trajektorie des Fahrzeugs 10 relativ dazu. Auch wird kontinuierlich ein Lenkverhalten des Fahrers erfasst und ermittelt, in welcher Reaktionszeit und in welcher Intensität der Fahrer im Mittel auf Änderungen der Relativposition von Fahrzeug 10 und Fahrbahnmarkierung durch Lenkbewegungen reagiert.

In Schritt II werden dann beispielsweise momentane Abweichungen des Fahrers von seinem üblichen Lenkverhalten als Merkmale erfasst. Diese können beispielsweise auf eine eingetretene Fahrunfähigkeit hindeuten.

In einem dritten Schritt III wird unter Einbezug der erkannten Merkmale eine Risikogröße bestimmt.

Um die Risikogröße aussagekräftiger zu machen, kann optional versucht werden, eine Reaktion des Fahrers hervorzurufen, indem beispielsweise ein Rütteleffekt am Lenkrad erzeugt wird.

Reagiert der Fahrer nicht, liegt ein weiteres Indiz für eine Fahrunfähigkeit vor, welches dann risikoerhöhend mit in die Risikogröße eingeht.

Weiterhin optional können zusätzliche Faktoren in die Ermittlung der Risikogröße einbezogen werden, deren Vorliegen im Falle eines Kontrollverlusts über das Fahrzeug das Risiko erhöht.

Rein exemplarisch kann im vorliegenden Fall erkannt werden, beispielsweise auf Daten eines Navigationssystems 14, dass das Fahrzeug 10 sich auf einen risikobehafteten Streckenpunkt zubewegt, beispielsweise eine nahegelegene Straßenkreuzung.

Trifft dies zusammen mit einem auffälligen Fahrverhalten des Fahrers oder gar mit einer auch auf zusätzliche Reize hin nicht hervorrufbaren Reaktion des Fahrers, kann von einem sehr hohen Risiko ausgegangen werden, auch wenn tatsächlich noch keine die Verkehrssicherheit unmittelbar beeinträchtigende Auswirkung eingetreten ist.

Auf einer solchen Basis, erfolgt in dem erfindungsgemäßen Verfahren in einem vierten Schritt IV eine Ausgabe eines Warnsignals an eine Umgebung des Fahrzeugs 10, wenn die Risikogröße einen vorausgesetzten Mindestwert hat. In dem vorangehend beschriebenen Fall liegt der Mindestwert aufgrund der vielen Indizien für einen bereits eingetretenen Kontrollverlust vor.

Der Fachmann legt in anderen Beispielen den Mindestwert und die Beiträge der Merkmale und zusätzlichen Faktoren zur Risikogröße nach fachmännischem Ermessen fest.

In dem vorliegenden Beispiel wird das Warnsignal als akustisches Warnsignal ausgegeben, um etwaige an der Straßenkreuzung befindliche Verkehrsteilnehmer frühzeitig zu warnen.

Der Einbezug der unterschiedlichen Merkmale und Faktoren führt dazu, dass die Sensibilität des Notfallassistenzsystems 12 deutlich erhöht wird. Um die Wahrscheinlichkeit von Fehlalarmen zu verringern, kann der vorausgesetzte Mindestwert der Risikogröße höher eingestellt werden, als beispielsweise ohne Einbezug der zusätzlichen Risikofaktoren.

Der Fachmann legt auch hier nach fachmännischem Ermessen fest, welches Sensibilitätsprofil er für das Notfallassistenzsystem 12 für zweckmäßig hält.

Die Ausgabe des Warnsignals kann auch mit einem automatischen Sicherheitseingriff in einen dynamischen Betriebszustand des Fahrzeugs 10 kombiniert werden, beispielsweise in Form einer Notbremsung.

Figur 2 zeigt ein erfindungsgemäßes Fahrzeug 10 mit einem erfindungsgemäßen Notfallassistenzsystem 12.

Das Notfallassistenzsystem 12 kann eine Reihe von technischen Systemen des Fahrzeugs 10 miteinander wirkverbinden.

So kann das Notfallassistenzsystem 12 beispielsweise Geschwindigkeitssensoren 16 und Lenksensoren 18 sowie gegebenenfalls Lenkradaktoren 20 umfassen.

Weitere technische Systeme können in Form eines Navigationssystems 14 oder auch in Form von Umfeldsensorik 22 vorliegen.

Zur Warnsignalgabe umfasst das Notfallassistenzsystem 12 beispielsweise eine Hupe 24 und Scheinwerfer 26 des Fahrzeugs 10.

Ferner kann das Notfallassistenzsystem 12 mit einem hier nicht dargestellten Notbremssystem verbunden sein.

Die unterschiedlichen Systeme sind beispielsweise über ein gemeinsames Steuergerät 28 miteinander wirkverbunden.

### Bezugszeichenliste

- 10: Fahrzeug
- 12: Notfallassistenzsystem
- 14: Navigationssystem
- 16: Geschwindigkeitssensor
- 18: Lenksensor
- 20: Lenkradaktor
- 22: Umfeldsensorik
- 24: Hupe
- 26: Scheinwerfer
- 28: Steuergerät

- I: Verfahrensschritt
- II: Verfahrensschritt
- III: Verfahrensschritt
- IV: Verfahrensschritt

## Patentansprüche

1. Verfahren zum Betrieb eines Fahrzeugs (10), umfassend die Schritte:
- Untersuchung eines Betriebszustands des Fahrzeugs (10) durch ein Notfallassistenzsystem (12) auf Merkmale, die mit einem zumindest drohenden Kontrollverlust über das Fahrzeug (10) korrespondieren;
- Ermittlung einer Risikogröße, zumindest aus erkannten Merkmalen; und
- Ausgabe eines Warnsignals an eine Umgebung des Fahrzeugs (10), wenn die Risikogröße einen vorausgesetzten Mindestwert hat.

2. Verfahren nach Anspruch 1, **dadurch gekennzeichnet, dass** zur Ermittlung der Risikogröße zusätzliche Faktoren einbezogen werden, deren Vorliegen im Falle eines Kontrollverlusts über das Fahrzeug (10) das Risiko erhöht.

3. Verfahren nach Anspruch 2, **dadurch gekennzeichnet, dass** der vorausgesetzte Mindestwert höher eingestellt ist, als ohne Einbezug der zusätzlichen Risikofaktoren.

4. Verfahren nach Anspruch 2 oder 3, **dadurch gekennzeichnet, dass** die zusätzlichen Faktoren ausgewählt werden aus der Gruppe: Zustand oder Verhalten von Objekten im Nahfeld des Fahrzeugs (10); Position des Fahrzeugs (10) mit Hinblick auf risikobehaftete Streckenpunkte; Zustand oder Verhalten von Objekten auf einer geplanten Strecke des Fahrzeugs (10).

5. Verfahren nach Anspruch 4, **dadurch gekennzeichnet, dass** ein Zustand oder Verhalten von Objekten im Nahfeld des Fahrzeugs (10) mit Umfeldsensorik (22) des Fahrzeugs (10) erfasst wird.

6. Verfahren nach Anspruch 4 oder 5, **dadurch gekennzeichnet, dass** eine Position des Fahrzeugs (10) mit Hinblick auf risikobehaftete Streckenpunkte und/oder ein Zustand oder Verhalten von Objekten auf einer geplanten Strecke des Fahrzeugs (10) aus Kartenmaterial und/oder Schwarmdaten ermittelt wird.

7. Verfahren nach einem der vorhergehenden Ansprüche, **dadurch gekennzeichnet, dass** das Warnsignal ein akustisches Warnsignal oder auch ein visuelles Warnsignal umfasst.

8. Verfahren nach einem der vorhergehenden Ansprüche, **dadurch gekennzeichnet, dass** das Warnsignal aktiviert wird, bevor ein automatischer Sicherheitseingriff in einen dynamischen Betriebszustand des Fahrzeugs (10) erfolgt.

9. Notfallassistenzsystem (12) für ein Fahrzeug (10), ausgebildet zur Durchführung eines Verfahrens nach einem der vorhergehenden Ansprüche.

10. Fahrzeug (10), umfassend ein Notfallassistenzsystem (12) nach Anspruch 9.
